# EUROPÄISCHE PATENTANMELDUNG

(11) **EP 1 698 572 A1**
(43) Veröffentlichungstag der Anmeldung: **06.09.2006**
(21) Anmeldenummer: 06450026.7
(22) Anmeldetag: 01.03.2006
(51) Int. Cl.: B65G 1/04

(54) **Automatisches Hochleistungskanallager**

(30) Priorität: 01.03.2005 AT 3392005
(71) Anmelder: ISA - Innovative Systemlösungen für die Automation Gesellschaft mit beschränkter Haftung, 8042 Graz (AT)
(72) Erfinder: Sammer, Markus, 8071 Hausmannstätten (AT); Schaberl, Werner, 8010 Graz (AT); Pichler, Karl-Heinz, 8063 Eggersdorf (AT)
(74) Vertreter: Margotti, Herwig Franz

(57) **Zusammenfassung**

Bei einem Automatischen Kanallager (1) mit zumindest einer Gasse (2), von der sich eine Vielzahl von Kanälen (3.x) erstreckt, welche Kanäle (3.x) zur Aufnahme von Gütern und/oder Paletten (4, 4a, 4b, 4c) ausgebildet sind, ist in der Gasse (2) eine Güter bzw. Paletten transportierende Gassenverfahreinheit (5) zwischen einer Eingangs/Ausgangsstation (9) und den Kanälen (3.x) hin- und herbewegbar. Der Gassenverfahreinheit (5) ist eine Vielzahl von Kanalfahrzeugen (7a, 7b) zugeordnet, welche Kanalfahrzeuge (7a, 7b) als autonome, unabhängig voneinander betreibbare Kanalfahrzeuge ausgebildet sind, die Güter bzw. Paletten aufnehmen, in den Kanälen transportieren und absetzen und die in den Gassenverfahreinheiten (5) transportierbar sind. Die Gassenverfahreinheiten (5) sind dazu ausgebildet, die Kanalfahrzeuge (7a, 7b), gegebenenfalls mit darauf befindlichen Gütern bzw. Paletten, an Kanäle (3.x) zu übergeben und von Kanälen aufzunehmen.

## Beschreibung

Die Erfindung fällt in das technische Gebiet vollautomatischer Läger. Diese Läger dienen der Lagerung von Waren in großen Mengen. Die Ein-, Um- bzw. Auslagerungen von Waren erfolgen über geeignete fördertechnische Einrichtungen vollautomatisch.

In der Lagerautomation unterscheidet man verschiedenste Techniken der Lagerautomation. Die am meisten verbreitete Technik ist der Einsatz von Regalbediengeräten (RBG), welche entweder gassengebunden oder als Kurvengänger ausgeführt werden. Einige dieser Lagertypen lagern die Paletten in Kanälen mehrfach tief. Die Bedienung erfolgt entweder über ein Regalbediengerät, das mit einem autonomen Kanalfahrzeug verknüpft ist, oder über das so genannte dynamische Blocklager, (Internationale Veröffentlichungsnummer WO 99/10258), welches in jeder Höhenebene über einen Verschubwagen verfügt. Die einzelnen Ebenen werden durch Vertikalförderer versorgt. Bei diesem System werden die Lagerpaletten durch eine relativ aufwendige Fördertechnik auf lagerspezifische Transport- und Lagerwägen gestellt. Diese werden aneinander gekoppelt in die Kanäle geschoben, bzw. wieder aus den Kanälen entnommen. Vorteile dieses Lagersystems sind einerseits eine sehr hohe Lagerdichte und andererseits eine sehr hohe Leistung.

Das System des so genannten dynamischen Blocklagers hat den Nachteil der hohen Anschaffungs- und Handhabungskosten der Lagerwägen. Für jeden Lagerplatz wird ein Wagen benötigt. Außerhalb des Lagers muss ein automatischer Speicher für die Lagerwägen errichtet werden. Die Paletten müssen über eine Fördertechnik auf diese Wägen gestellt und wieder abgehoben werden.

Die vorliegende Erfindung löst die geschilderten Probleme des Standes der Technik durch Bereitstellen eines automatischen Lagers gemäß den Merkmalen des Anspruchs 1. Vorteilhafte Ausgestaltungen der Erfindung sind in den Unteransprüchen dargelegt.

Die hier dargestellte Erfindung bietet ein Lagersystem, welches ohne die erwähnten Lagerwägen auskommt, jedoch ebenfalls über eine vergleichbare Leistung und eine vergleichbare Lagerdichte verfügt.

Gemäß der Erfindung werden die Kanäle des Lagers durch autonome (z.B. mit Batterien betrieben) und drahtlos gesteuerte Kanalfahrzeuge bedient, welche in der Lage sind, Paletten in Kanäle zu transportieren und Paletten aus Kanälen auszulagern. Die Umsetzung dieser Kanalfahrzeuge erfolgt über die zentrale Gasse mittels eines Regalbediengerätes, welches mehrere Ebenen bedienen kann oder eines Verschubwagens (Shuttles), welcher ein bis zwei Ebenen bedient. Das wesentliche Kennzeichen der Erfindung ist die simultane Verwendung mehrerer autonomer Kanalfahrzeuge je Verschubwagen (Shuttle) oder je Regalbediengerät. Der Vorteil liegt darin, dass beim Einsatz mehrerer Kanalfahrzeuge die Kanalbedienung während der Transferzeit des Verschubwagens erfolgen kann. Bei Ankunft des Verschubwagens (Shuttles) am Zielplatz ist jeweils das entsprechende Kanalfahrzeug bereits an der Übergabeposition. Die Gesamtleistung des Systems entspricht daher der Leistung eines dynamischen Blocklagers, ist durch den Wegfall der fahrbaren Unterpaletten jedoch wesentlich einfacher und kostengünstiger.

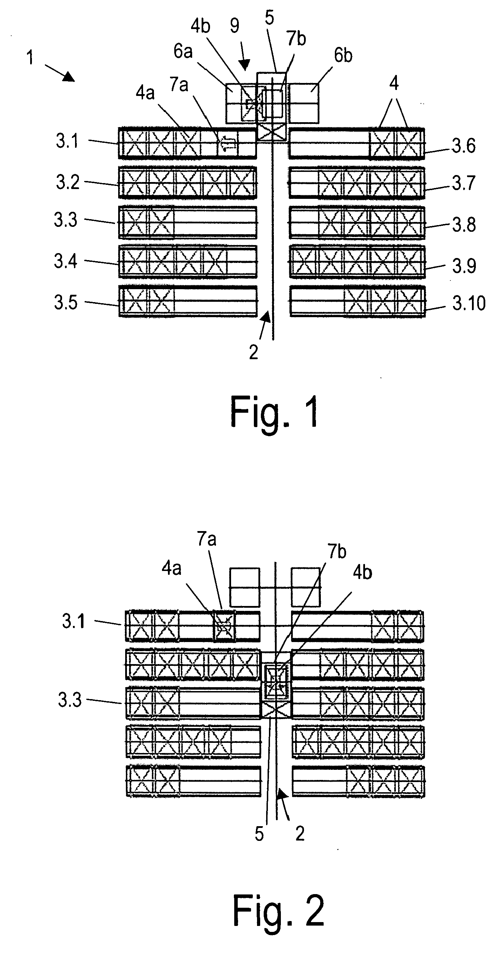

Die Erfindung wird nun anhand eines Ausführungsbeispiels unter Bezugnahme auf die Zeichnungen näher erläutert. In den Zeichnungen zeigen Fig. 1 bis Fig. 5 schematisch ein erfindungsgemäßes automatisches Lager in einer Abfolge charakteristischer Schritte von Ein- bzw. Auslagerbewegungen.

Das erfindungsgemäße automatische Kanallager 1 umfasst eine Gasse 2, von der sich eine Vielzahl von Kanälen 3.x erstreckt, im vorliegenden Ausführungsbeispiel zehn Kanäle 3.1 bis 3.10. Die Kanäle 3.x sind zur Aufnahme von Paletten 4 ausgebildet, auf denen beliebige Güter gelagert sein können. Es ist aber auch möglich, die Güter direkt in den Kanälen zu lagern. Die vorliegende Beschreibung erfolgt zwar unter Bezugnahme auf Paletten, es ist aber zu verstehen, dass darunter auch Güter subsummiert sind. In der Gasse 2 bewegt sich eine Gassenverfahreinheit 5, die im vorliegenden Beispiel als Verschubwagen (Shuttle) konfiguriert ist, in anderen Ausführungsformen aber auch als Regalbediengerät ausgebildet sein kann. Die Gassenverfahreinheit 5 ist dazu ausgebildet, Paletten von einer Eingangs/Ausgangsstation 9, die z.B. Heber 6a, 6b umfasst, aufzunehmen bzw. darauf abzulegen. Weiters kooperiert die Gassenverfahreinheit 5 mit einer Vielzahl von Kanalfahrzeugen 7a, 7b, die temporär auf der Gassenverfahreinheit 5 mittransportiert werden und die dazu ausgebildet sind, Paletten von der Gassenverfahreinheit 5 in die Kanäle 3.1 bis 3.10 einzulagern bzw. in den Kanälen eingelagerte Paletten aufzunehmen und an Übergabestellen an die Gassenverfahreinheit 5 zu übergeben.

Wie in Fig. 1 dargestellt, befindet sich ein erstes Kanalfahrzeug 7a gerade in dem Kanal 3.1 auf dem Weg, um eine Palette 4a auszulagern, während zur gleichen Zeit die Gassenverfahreinheit 5 am Heber 6a eine andere Palette 4b übernimmt, wobei es die Palette 4b auf ein zweites Kanalfahrzeug 7b setzt, das in der Gassenverfahreinheit 5 mittransportiert wird.

In Fig. 2 befindet sich die Gassenverfahreinheit 5 mit dem zweiten Kanalfahrzeug 7b und der einzulagernden Palette 4b bereits mitten in der Gasse 2 auf dem Weg zu ihrem Zielkanal 3.3, während sich das erste Kanalfahrzeug 7a mit der auszulagernden Palette 4a auf dem Weg zum Anfang des Kanals 3.1 befindet, welcher Anfang einen Übergabeplatz bildet.

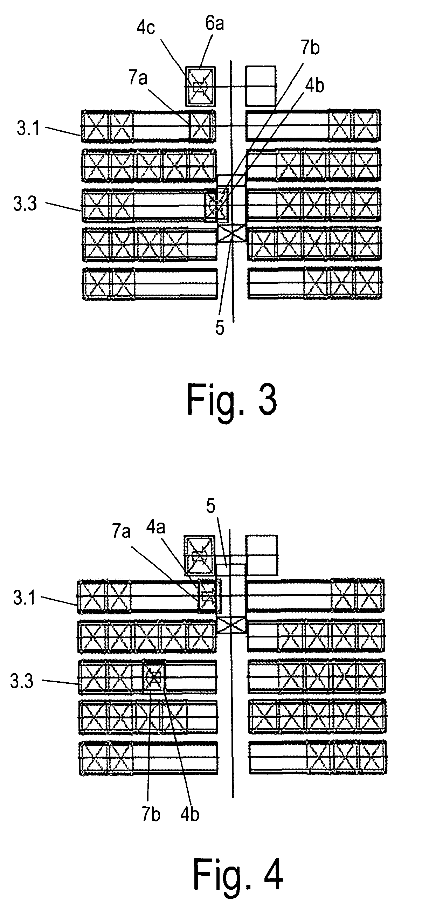

Fig. 3 zeigt, dass am Heber 6a bereits neuerlich eine Palette 4c zum Einlagern bereitsteht. Zwischenzeitig hat das erste Kanalfahrzeug 7a den Übergabeplatz am Anfang des Kanals 3.1 erreicht, während die Gassenverfahreinheit 5 gerade das zweite Kanalfahrzeug 7b mit der darauf positionierten Palette 4b am Übergabeplatz an den Zielkanal 3.3 abgibt.

In der in Fig. 4 dargestellten Situation ist das zweite Kanalfahrzeug 7b auf dem Weg zu seinem Zielplatz innerhalb des Kanals 3.3, um dort die Palette 4b einzulagern, während die Gassenverfahreinheit 5 am Übergabeplatz des ersten Kanals 3.1 angelangt ist und das erste Kanalfahrzeug 7a zusammen mit der darauf befindlichen auszulagernden Palette 4a übernimmt. Eine Wartezeit für die Gassenverfahreinheit 5 trat hier nicht auf, da das erste Kanalfahrzeug 7a bereits am Übergabeplatz parat war.

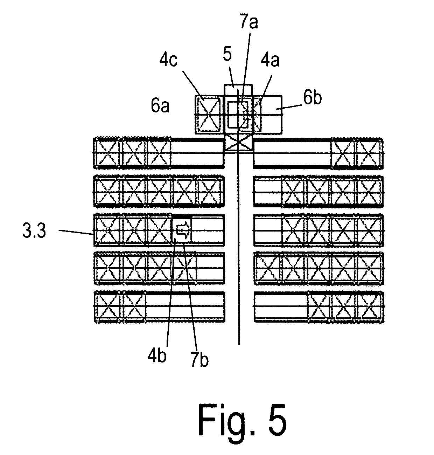

In Fig. 5 übergibt die Gassenverfahreinheit 5 die auszulagernde Palette 4a an den zweiten Heber 6b und übernimmt die neue einzulagernde Palette 4c vom ersten Heber 6a, indem sie die Palette 4c auf dem mitgeführten ersten Kanalfahrzeug 7a positioniert. Zwischenzeitig hat das zweite Kanalfahrzeug 7b die Palette 4b bereits im Kanal 3.3 abgestellt und befindet sich auf dem Weg zum Übergabeplatz.

Der geschilderte Ablauf des Einlagerns/Auslagerns von Paletten macht das erfindungsgemäße Prinzip des simultanen Einsatzes mehrerer autonomer, d.h. nicht an die Verfahreinheit kabelgebundener Kanalfahrzeuge deutlich, wobei in diesem Ausführungsbeispiel der vereinfachten Darstellung halber nur der Einsatz von zwei Kanalfahrzeugen gezeigt wurde, die Erfindung aber selbstverständlich nicht darauf beschränkt ist. Die Fahrzeiten der Kanalfahrzeuge innerhalb der Kanäle wirken sich bei korrekter Auslegung durch dieses Verfahren nicht mehr auf die Systemleistung der Gassenverfahreinheiten aus.

Die parallele Einlagerung/Auslagerung von Gütern bzw. Paletten durch mehrere Kanalfahrzeuge, die einer Gassenverfahreinheit zugeordnet sind, erhöht den Durchsatz und erlaubt die Realisierung tieferer Kanäle. Außerdem bietet das System aufgrund der Vielzahl an verwendeten Kanalfahrzeugen eine höhere Ausfallssicherheit und Redundanz als bekannte automatische Hochleistungsregallager.

## Patentansprüche

1. Automatisches Kanallager (1) mit zumindest einer Gasse (2), von der sich eine Vielzahl von Kanälen (3.x) erstreckt, wobei die Kanäle (3.x) zur Aufnahme von Gütern und/oder Paletten (4, 4a, 4b, 4c) ausgebildet sind, wobei in der Gasse (2) eine Güter bzw. Paletten transportierende Gassenverfahreinheit (5) zwischen einer Eingangs/Ausgangsstation (9) und den Kanälen (3.x) hin- und herbewegbar ist, **dadurch gekennzeichnet, dass** der Gassenverfahreinheit (5) eine Vielzahl von Kanalfahrzeugen (7a, 7b) zugeordnet ist, welche Kanalfahrzeuge (7a, 7b) als autonome, unabhängig voneinander betreibbare Kanalfahrzeuge ausgebildet sind, die Güter bzw. Paletten aufnehmen, in den Kanälen transportieren und absetzen und die in den Gassenverfahreinheiten (5) transportierbar sind, wobei die Gassenverfahreinheiten (5) dazu ausgebildet sind, die Kanalfahrzeuge (7a, 7b), gegebenenfalls mit darauf befindlichen Gütern bzw. Paletten, an Kanäle (3.x) zu übergeben und von Kanälen aufzunehmen.

2. Automatisches Kanallager nach Anspruch 1, **dadurch gekennzeichnet, dass** die Kanalfahrzeuge (7a, 7b) batteriebetrieben sind.

3. Automatisches Kanallager nach Anspruch 1 oder 2, **dadurch gekennzeichnet, dass** die Kanalfahrzeuge (7a, 7b) drahtlos gesteuert sind.

4. Automatisches Kanallager nach einem der vorhergehenden Ansprüche, **dadurch gekennzeichnet, dass** die Gassenverfahreinheit (5) als Verschubwagen (Shuttle) oder als Regalbediengerät konfiguriert ist.
